# EUROPÄISCHE PATENTSCHRIFT

(11) **EP 0 967 316 B1**
(45) Veröffentlichungstag und Bekanntmachung des Hinweises auf die Patenterteilung: **30.07.2003**
(21) Anmeldenummer: 99109421.0
(22) Anmeldetag: 11.05.1999
(51) Int. Cl.: D05B 69/10, D05B 55/14, H02K 41/02

(54) **Antrieb für eine Nähmaschine, insbesondere eine Industrienähmaschine**
Drive for a sewing machine, in particular an industrial sewing machine
Entraînement pour une machine à coudre, en particulier une machine à coudre industrielle

(30) Priorität: 23.06.1998 DE 19827846
(43) Veröffentlichungstag der Anmeldung: 29.12.1999
(73) Patentinhaber: Frankl & Kirchner GmbH. & Co. KG Fabrik für Elektromotoren und elektrische Apparate, D-68723 Schwetzingen (DE)
(72) Erfinder: Nohl, Friedrich Gerd, 69231 Rauenberg (DE)
(74) Vertreter: Schneck, Herbert, Dipl.-Phys., Dr.

(56) Entgegenhaltungen:
- EP-A- 0 612 877
- WO-A-97/15708
- US-A- 2 232 692
- US-A- 2 584 013
- US-A- 3 875 489

## Beschreibung

Die Erfindung richtet sich auf einen Antrieb für eine Nähmaschine, insbesondere eine Industrienähmaschine, mit einer elektromagnetisch direkt angetriebenen Nadelstange, wobei gesondert hiervon mittels eines eigenen Motors eine untere Welle angetrieben wird, von welcher wenigstens der Antrieb von Greifer und Transporteur abgeleitet wird.

Eine derartige Nähmaschine ist aus EP 0 612 877 A1 bekannt. Dort wird die Bewegung der Nadelstange mittels von einer zentralen Steuereinheit gesteuerter wechselnder Magnetfelder bewerkstelligt, wozu Solenoiden in Form ringförmiger Spulen vorgesehen sind, die jeweils einen hohlen Kernbereich umschließen. In diesem Kernbereich kann sich eine Nadelstangenanordnung hin- und herbewegen, wobei ein hinreichender magnetischer Fluß erzielt wird, um einen mit der eigentlichen Nadelstange verbundenen Körper wechselweise zu magnetisieren und so hin- und herzubewegen.

Aus US-3,425,376 ist ein Antrieb für die Nadelstange bekannt, wobei während einer H-Phase eine Spule dieses Antriebs so angesteuert wird, daß die Nadelstange in einem Magneten nach unten gezogen wird, wohingegen während einer L-Phase die Stromrichtung umgekehrt und die Nadelstange nach oben bewegt wird. Während der Auf- und Abwärts-Bewegung findet keine kontrollierte Bewegung statt, was bei dieser Konstruktion auch nicht möglich wäre. Dementsprechend konnte sich ein derartiger, seit Jahrzehnten bekannter Antrieb in der Praxis auch nicht durchsetzen.

Auch bei einem aus US-5,189,971 bekannten Antrieb wird eine zum Teil aus einer Eisenlegierung bestehende Nadelstange zwischen einer oberen und unteren Endposition hin- und herbewegt, ohne daß eine Kontrolle in den einzelnen Bewegungsphasen bewerkstelligt wird oder möglich wäre.

Vor der Verwendung von Direktantrieben für die Nadelstange war es im übrigen auch schon bekannt, die bei Nähmaschinen üblicherweise vorhandene Oberwelle und Unterwelle durch gesonderte Motoren anzutreiben, die über eine elektrische Kopplung phasenstarr betrieben wurden. Die letztgenannten Konstruktionen weisen aber den Nachteil auf, daß weiterhin mechanische Einrichtungen zur Umsetzung der Drehbewegung der oberen Welle in die von der Nähnadel auszuführende translatorische Bewegung erforderlich sind, so daß eine Einsparung mechanischer Teile und eine Verminderung der insgesamt involvierten Trägheitsmomente nicht möglich ist.

Die bekannten Linearantriebe für die Nadelstange bei Nähmaschinen sind mit dem Nachteil behaftet, daß es herkömmlicherweise nicht oder nur unzureichend gelungen ist, der Nähmaschine den erforderlichen Impuls für das problemlose Durchstechen auch schwererer Stoffe und Materialien zu verleihen und hierfür die Nadelbewegung gezielt zu steuern.

Hiervon ausgehend liegt der Erfindung die Aufgabe zugrunde, eine Nähmaschine mit einem elektromagnetischen Direktantrieb für die Nadelstange so auszugestalten, daß die Beschleunigung der Nadelstange und deren Durchdringungsvermögen gegenüber dem Stoff vergleichbar ist mit den Werten herkömmlicher drehangetriebener Nähmaschinen.

Diese Aufgabe wird erfindungsgemäß dadurch gelöst, daß an der Nadelstange eine Mehrzahl von Magneten befestigt ist, wobei aufeinanderfolgende Magneten jeweils entgegengesetzte Magnetisierung aufweisen. Die Magneten können als Magnetblöcke oder als die Nadelstange umgebende Magnetringe ausgebildet sein. Seitlich der Magneten ist dabei eine Mehrzahl von Spulen derart angeordnet, daß der magnetische Fluß einer bestimmten Spule beispielsweise durch einen Magneten und den jeweils benachbarten Magneten geführt ist. Bei ringförmigen Magneten sind die Spulen beispielsweise U-förmig ausgebildet, wobei die geöffnete Seite auf die Magneten der Nadelstange hin gerichtet ist.

Der erfindungsgemäß vorgesehene elektromagnetische Linearantrieb ist also praktisch ein Linearantrieb in Form eines Schrittmotors mit vorgegebener linearer Schrittweite. Dementsprechend eröffnet ein solcher Antrieb die Möglichkeit, über die vorgegebene Anzahl von Schritten pro Nadelstangenhub und durch die Ansteuercharakteristik für jeden einzelnen Schritt ein bestimmtes Bewegungs- bzw. Antriebskraftprofil zu fahren, wie z.B. Sinusbewegung, Sinusquadrat, symmetrischer Sägezahn, asymmetrischer Sägezahn usw.

Der Greifer kann, muß aber nicht entsprechend diesen Profilen synchronisiert werden. Wichtig ist lediglich, daß die Periodendauer mit der Periode des Nadelstangenantriebes übereinstimmt und zumindest im Fadenfangbereich eine Winkelsynchronisation gewährleistet ist.

Da keine Schwungmasse vorhanden ist, muß die Durchstechenergie elektromagnetisch aufgebracht werden, was beispielsweise mit einer Ansteuerung mittels eines asymmetrischen Sägezahnprofils erreicht werden kann, die eine höhere Geschwindigkeit und damit eine höhere kinetische Energie im Zeitpunkt der Abwärts-Bewegung beim Durchstechen ermöglichen kann.

Mit anderen Worten kann man sich den erfindungsgemäßen Linearantrieb als einen aufgewickelten bzw. linearisierten herkömmlichen Drehfeldmotor vorstellen. Die Steuerung bewerkstelligt die Ansteuerung der einzelnen Spulen über den Prozessor derart, daß ein sogenanntes Wanderfeld entsteht, wobei über den Betrag der Stromstärke in den Polen die auf die Nadelstange ausgeübte magnetische Kraft bei jedem Schritt bestimmt wird.

Der Antrieb der an sich in konventioneller Weise ausgestalteten unteren Welle kann günstigerweise mit einem gesonderten Drehfeldmotor vorgenommen werden, wobei ein leistungsfähiger Prozessor, z.B. ein Digital Signal Processor (DSP) die beiden Antriebe so ansteuert, daß sowohl eine Anfangssynchronisation als anschließend auch ein phasenstarrer Lauf gewährleistet sind.

Eine Nähmaschine, z.B. in Form eines Schnellnähers, besteht dann nur noch aus dem vorderen Viertel des oberen Armes und dem unteren Teil mit Spule, Greifer, Abschneider und Transporteur. Die mechanische Verbindung der beiden Teile wird in Abhängigkeit vom individuellen Anwendungsfall gestaltet, wie z.B. in Form herkömmlicher X-Y-Tische oder dergleichen.

In weiterer Ausgestaltung der Erfindung kann mit Vorteil vorgesehen sein, daß dann, wenn an den Umkehrpunkten des Linearantriebes die Nadelstange auf Null abgebremst wird, diese Abbremsenergie in einem Zwischenkreis, beispielsweise mittels eines Zwischenkreiskondensators, gespeichert und zum Zeitpunkt des maximal erforderlichen Impulses, also beim Ein - und Durchstechen, zurückgespeist wird. Auf diese Weise wird erreicht, daß die Bremsenergie nicht vernichtet wird und zumindest zu einem Großteil wieder zurückgespeist werden kann. Wegen der insgesamt geringeren bewegten Massen kann im Zusammenhang mit dieser Ausgestaltung also mit einer vergleichsweise geringen Antriebsleistung gearbeitet werden.

In weiterer Ausgestaltung der Erfindung kann vorgesehen sein, daß die Nadelstange wenigstens teilweise über eine Magnetlagerung gelagert ist. Insbesondere bei der Ausbildung wenigstens des unteren Lagers als Magnetlager wird eine absolute Ölfreiheit der Nadelstange gewährleistet. Günstigerweise ist vorgesehen, daß das obere Lager der Nadelstange durch den Antrieb selbst gebildet wird.

Eine derartige Magnetlagerung arbeitet ölfrei und verschleißfrei, weist keinerlei mechanische Reibung auf und gewährleistet einen ruhigen Lauf auch bei höchsten Drehzahlen.

Dabei kann weiterhin vorgesehen sein, daß die Zentrierkraft des Magnetlagers in Abhängigkeit von der Nadelstangenposition derart gesteuert wird, daß die Zentrierkraft kurz vor dem Einstichpunkt der Nadel in das Nähgut erhöht wird, um ein Ausbrechen der Nadelstange zu vermeiden, wohingegen die Zentrierkraft in der übrigen Bewegungsphase bei entsprechend geringer Leistungsaufnahme vermindert wird.

Um zu verhindern, daß die Nadelstange bei einer rein magnetischen Lagerung nach dem Ausschalten des Netzes nicht durchfällt, ist eine mechanische Haltebremse vorgesehen, die an der Nadelstange bei ausgeschaltetem Netz angreift und beim Einschalten des Netzes außer Eingriff gebracht wird.

Nachfolgend wird die Erfindung anhand bevorzugter Ausführungsbeispiele in Verbindung mit der Zeichnung näher erläutert. Dabei zeigen:
- Fig. 1: einen Längsschnitt durch eine erste Ausführungsform eines elektromagnetischen Linarantriebes,
- Fig. 2: einen Querschnitt durch die Ausführungsform nach Fig. 1,
- Fig. 3: einen Längsschnitt durch eine zweite, runde Ausführungsform eines Linearantriebes,
- Fig. 4: einen Längsschnitt mit einem Spulenkörper,
- Fig. 5: einen Querschnitt durch die Ausführungsform nach Fig. 4,
- Fig. 6: einen 12-spuligen Linearantrieb,
- Fig. 7 bis 9: verschiedene Ausführungsformen einer Magnetlagerung für die Nadelstange, und
- Fig. 10: eine Ausführungsform, bei welcher der Linearmotor in zwei voneinander beabstandete Abschnitte aufgeteilt ist.

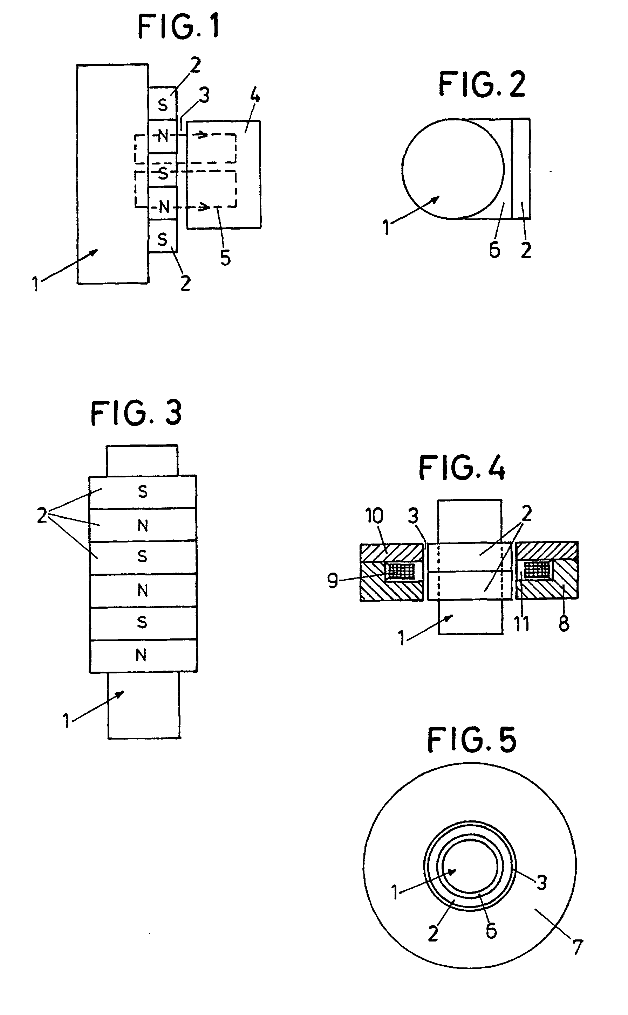

In Fig. 1 ist eine Nadelstange 1 dargestellt, an welcher eine Mehrzahl von quaderförmigen Magneten so befestigt ist, daß aufeinanderfolgende Magneten umgekehrte Polarisierung aufweisen. Von den Magneten 2 über einen Luftspalt 3 getrennt ist ein Stator 4 vorgesehen. Zwischen Nadelstange 1 und den Magneten 2 ist ein Rückflußmaterial 6, wie in Fig. 2 erkennbar, angeordnet. Der magnetische Fluß 5 ist so ausgebildet, daß er das Rückflußmaterial 6 an der Nadelstange 1 und jeweils benachbarte Magneten 2 sowie den Stator 4 durchsetzt.

Bei der in Fig. 3 bis 5 dargestellten Ausführungsform ist die runde Nadelstange 1 von Magneten 2 in Ringform umgeben, welche an der Nadelstange 1 befestigt sind.

Wie insbesondere aus Fig. 5 ersichtlich ist, kann auch hier zwischen der Nadelstange 1 und den ringförmigen Magneten 2 ein Rückflußmaterial 6 vorgesehen sein. Spulenkörper 7 umgeben die Magnetringe 2 unter Freilassung eines Luftspaltes 3.

Wie aus Fig. 4 erkennbar ist, umfassen die Spulen 7 einen Spulengrundkörper 8, Windungen 9, einen Spulenkörperdeckel 10 und eine Spulenhalterung 11.

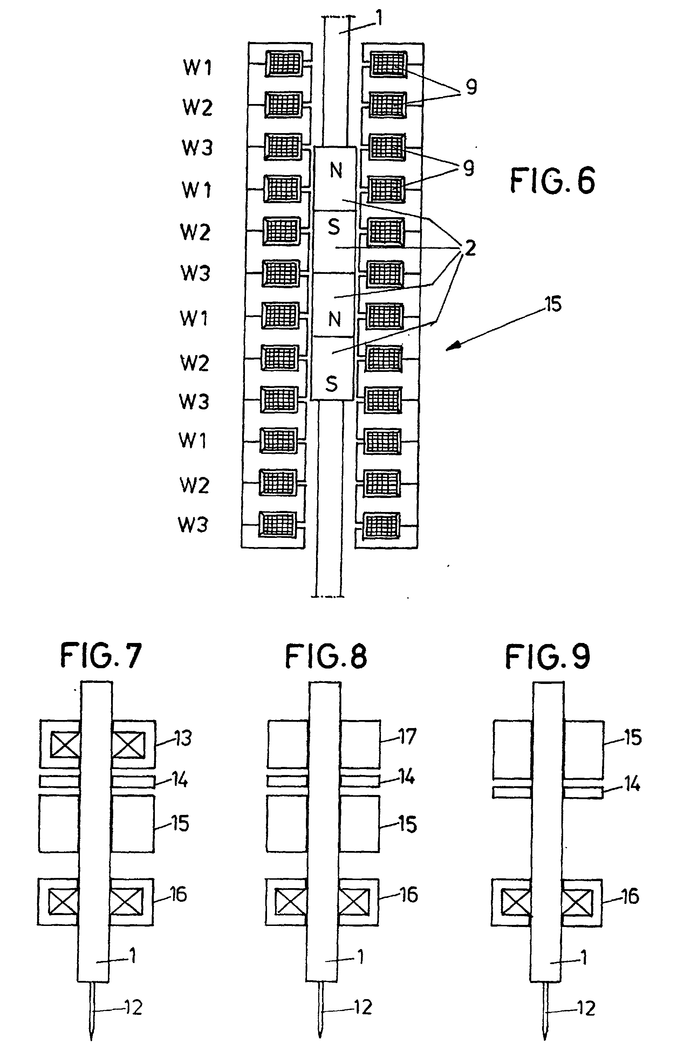

In Fig. 6 ist ein schematischer Längsschnitt durch einen 12-spuligen Linearantrieb dargestellt. Diese Anordnung entspricht einem 8-poligen bürstenlosen Gleichstrommotor mit zwölf Nuten.

Details der Ansteuerung derartiger Linearantriebe werden beispielsweise beschrieben in der Veröffentlichung "PROCEEDINGS of the International Conference PCIM 1996 EUROPE, May 21-23, 1996. Intelligent Motion 96, Seiten 151 - 158 und Seiten 621 - 626".

In Fig. 7 bis 9 ist schematisch eine Magnetlagerung für die Nadelstange 1 mit der Nähnadel 12 dargestellt.

Bei der Ausführungsform in Fig. 7 ist ein oberes Magnetlager 13, eine Haltebremse 14, ein Linearantrieb 15, wie er beispielsweise in Fig. 6 dargestellt ist, und ein unteres Magnetlager 16 vorgesehen.

Bei der Ausführungsform nach Fig. 8 ist oben ein herkömmliches mechanisches Lager 17 in Kombination mit einem unteren Magnetlager 16 vorgesehen, wobei vor allem die Ölfreiheit der Nadelstange 1 im unteren Bereich gewährleistet wird.

Bei der Ausführungsform nach Fig. 9 übernimmt der Linearantrieb 15 gleichzeitig die Funktion des oberen Magnetlagers, wobei darüber hinaus dann nur noch ein unteres Magnetlager 16 vorgesehen ist.

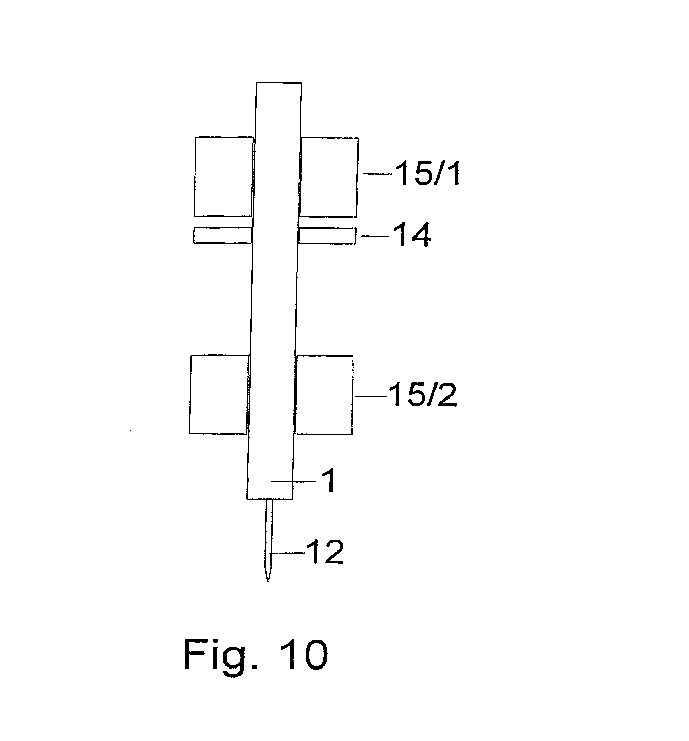

In Fig. 10 ist eine Ausführungsform dargestellt, bei der der Linearmotor 15 aufgeteilt ist in einen oberen Teil 15/1 und einen unteren Teil 15/2, wodurch sich aus die Zentrierung der Nadelstange 1 bewerkstelligen läßt.

## Patentansprüche

1. Antrieb für eine Nähmaschine, insbesondere eine Industrienähmaschine, mit einer elektromagnetisch direkt angetriebenen Nadelstange, wobei gesondert hiervon mittels eines eigenen Motors eine untere Welle angetrieben wird, von welcher wenigstens der Antrieb von Greifer und Transporteur abgeleitet wird, **dadurch gekennzeichnet, daß** an der Nadelstange (1) eine Mehrzahl von Magneten (2) befestigt ist, wobei aufeinanderfolgende Magneten (2) jeweils entgegengesetzte Magnetisierungen aufweisen, **daß** durch einen Luftspalt (3) von diesen Magneten (2) getrennt ortsfest eine Mehrzahl von Spulen (Windungen 9) angeordnet ist, deren Polabstand zum Abstand der Magneten (2) korrespondiert, und **daß** die Bestromung der Spulen (Windungen 9) derart gesteuert wird, daß die Nadelstange (1) eine lineare Auf- und Abbewegung entsprechend einem vorgebbaren Geschwindigkeits- bzw. Beschleunigungsprofil ausführt.

2. Antrieb nach Anspruch 1, **dadurch gekennzeichnet, daß** die Periodendauer der Nadelstangenbewegung mit der Periodendauer des Antriebs des Greifers übereinstimmt und im Fadenfangbereich eine Winkelsynchronisation bewerkstelligt wird.

3. Antrieb nach Anspruch 1, **dadurch gekennzeichnet, daß** die Spulen (Windungen 9) für den Nadelstangenantrieb derart angesteuert werden, daß die Nadelstange (1) im Zeitpunkt des Ein- bzw. Durchstechens durch den Stoff eine erhöhte kinetische Energie aufweist.

4. Antrieb nach Anspruch 1, **dadurch gekennzeichnet, daß** die Unterwelle durch einen Drehfeldmotor angetrieben wird.

5. Antrieb nach Anspruch 4, **dadurch gekennzeichnet, daß** ein Steuerprozessor den Nadelstangenantrieb und den Drehfeldmotor anfangssynchron und phasenstarr ansteuert.

6. Antrieb nach Anspruch 1, **dadurch gekennzeichnet, daß** an den Umkehrpunkten der Nadelstange (1) bei deren Abbremsen die Abbremsenergie in einem Zwischenkreis, insbesondere in einen Zwischenkreiskondensator zurückgespeist und beim erneuten Beschleunigen wider in kinetische Energie umgewandelt wird.

7. Antrieb nach Anspruch 1, **dadurch gekennzeichnet, daß** die Nadelstange (1) wenigstens teilweise über eine Magnetlagerung (13) gelagert ist.

8. Antrieb nach Anspruch 7, **dadurch gekennzeichnet, daß** ein oberes Magnetlager der Nadelstange (1) durch den Linearantrieb (15) selbst gebildet ist und eine mechanische Haltebremse (14) vorgesehen ist, die an der Nadelstange (1) bei ausgeschaltetem Netz angreift und beim Einschalten des Netzes außer Eingriff gebracht wird.

9. Antrieb nach Anspruch 7, **dadurch gekennzeichnet, daß** der Linearmotor (15) in einen oberen Teil 15/1 und einen unteren Teil 15/2 aufgeteilt ist.

## Claims

1. Drive for a sewing machine, in particular an industrial sewing machine, comprising an electro-magnetically directly driven needle bar, wherein a bottom shaft is driven separately there-from by means of a motor of its own, with at least the drive of the hook and feeder being derived from the bottom shaft, **characterized in that** a plurality of solenoids (2) is fixed to the needle bar (1), with successive solenoids (2) having opposite magnetizations; **in that**, separated by an air gap (3) from these solenoids (2), a plurality of coils (windings 9) is arranged stationarily, the polar distance of which corresponds to the distance of the solenoids (2); and **in that** the current supply to the coils (windings 9) is controlled so that the needle bar (1) makes a linear up and down motion in accordance with a to-be-given rate and acceleration pattern.

2. Drive according to claim 1, **characterized in that** the period of the needle bar motion is equal to the period of the hook actuation and **in that** angle synchronization is implemented in the catch thread area.

3. Drive according to claim 1, **characterized in that** the coils (windings 9) for the needle bar drive are triggered such that the needle bar (1), when stitching into or through the cloth, has an increased kinetic energy.

4. Drive according to claim 1, **characterized in that** the bottom shaft is driven by a synchro motor.

5. Drive according to claim 4, chacterized in that a control processor triggers the needle bar drive and the synchro motor initially synchronously and rigidly in phase.

6. Drive according to claim 1, **characterized in that,** at the cuspidal points of the needle bar (1) when braked, the braking energy is fed back into an intermediate circuit, in particular an intermediate circuit capacitor, and, upon renewed acceleration, is again converted into kinetic energy.

7. Drive according to claim 1, **characterized in that** the needle bar (1) is mounted at least partially by way of a magnetic bearing (13).

8. Drive according to claim 7, **characterized in that** an upper magnetic bearing of the needle bar (1) is formed by the linear drive (15) itself and that a mechanical stop brake (14) is provided, which engages with the needle bar (1) upon disconnection of the current supply and is disengaged when the current supply cuts in.

9. Drive according to claim 7, **characterized in that** the linear motor (15) is divided into a top part 15/1 and a bottom part 15/2.

## Revendications

1. Entraînement pour une machine à coudre, en particulier une machine à coudre industrielle, comportant une barre à aiguille entraînée directement par voie électromagnétique, un arbre inférieur étant entraîné de façon séparée de celle-ci au moyen d'un propre moteur, arbre duquel est dérivé au moins l'entraînement du preneur et du transporteur, **caractérisé en ce qu'**une pluralité d'aimants (2) sont fixés sur la barre à aiguille (1), des aimants successifs (2) présentant chacun des aimantations opposées, **en ce qu'**une pluralité de bobines (enroulements 9) sont agencées de façon stationnaire et séparées de ces aimants (2) par un entrefer (3), bobines dont la distance polaire correspond à la distance des aimants (2), et **en ce que** l'alimentation en courant des bobines (enroulements 9) est commandée de telle sorte que la barre à aiguille (1) effectue un mouvement linéaire vers le haut et vers le bas en correspondance d'un profil de vitesse ou d'accélération prédéterminé.

2. Entraînement selon la revendication 1, **caractérisé en ce que** la durée périodique du mouvement de la barre à aiguille coïncide avec la durée périodique de l'entraînement du preneur, et **en ce qu'**une synchronisation angulaire est assurée dans la zone de captage de fil.

3. Entraînement selon la revendication 1, **caractérisé en ce que** pour l'entraînement de la barre à aiguille, les bobines (enroulements 9) sont pilotées de telle sorte que la barre à aiguille (1) présente une énergie cinétique accrue à l'instant de la pénétration dans ou de la percée du tissu.

4. Entraînement selon la revendication 1, **caractérisé en ce que** l'arbre inférieur est entraîné par un moteur à champ rotatif.

5. Entraînement selon la revendication 4, **caractérisé en ce qu'**un processeur de commande pilote à départ synchrone et à phase bloquée l'entraînement de la barre à aiguille et le moteur à champ rotatif.

6. Entraînement selon la revendication 1, **caractérisé en ce qu'**au niveau des points d'inversion de la barre à aiguille (2), lors de sa décélération, l'énergie de décélération est ré-injectée dans un circuit intermédiaire, en particulier dans un condensateur de circuit intermédiaire, et est reconvertie en énergie cinétique lors d'une nouvelle accélération.

7. Entraînement selon la revendication 1, **caractérisé en ce que** la barre à aiguille (1) est montée du moins partiellement via un palier magnétique (13).

8. Entraînement selon la revendication 7, **caractérisé en ce qu'**un palier magnétique supérieur de la barre à aiguille (1) est formé par l'entraînement linéaire (15) lui-même, et **en ce qu'**il est prévu un frein de maintien mécanique (14) qui attaque la barre à aiguille (1) lorsque l'alimentation électrique est coupée, et qui est dégagé lors la mise en service de l'alimentation électrique.

9. Entraînement selon la revendication 7, **caractérisé en ce que** le moteur linéaire (15) est subdivisé en une partie supérieure 15/1 et en une partie inférieure 15/2.
